# EUROPEAN PATENT APPLICATION

(11) **EP 3 065 475 A1**
(43) Date of publication of application: **07.09.2016**
(21) Application number: 14801118.2
(22) Date of filing: 13.05.2014
(51) Int. Cl.: H04W 52/18

(54) **TRANSMITTING POWER CONTROL AND PROCESSING METHOD AND DEVICE, AND TERMINAL**

(30) Priority: 31.10.2013 CN 201310529439
(71) Applicant: ZTE Corporation, Guangdong Province 518057 (CN)
(72) Inventor: SUN, Chengwen, Shenzhen Guangdong Province 518057 (CN); WU, Hong, Shenzhen Guangdong Province 518057 (CN)
(74) Representative: Novagraaf Technologies
(86) International application number: PCT/CN2014/077375
(87) International publication number: WO 2014/187251

(57) **Abstract**

Provided are a method and device for controlling transmitting power, and a terminal. The method includes that: a strength value of a received Wireless Fidelity (WiFi) signal is detected; a transmitting power value corresponding to the strength value of the received WiFi signal is determined according to the strength value of the received WiFi signal and a corresponding relationship between a strength value of a WiFi signal and a transmitting power value; and the transmitting power is controlled according to the determined transmitting power value. The present disclosure solves the problems in related art of not only weak independence but also low processing efficiency when processing the power consumption of the terminal, and then achieves the effect that the terminal controls the amount of the transmitting power according to the strength value of the WiFi singal received by terminal, so that not only is a third party not required to be depended on, but also the power consumption of a system can be effectively reduced.

## Description

### Technical Field

The present disclosure relates to the field of communications, and in particular to a method and device for controlling transmitting power, and a terminal.

### Background

The Wireless Fidelity (WiFi) is a technology which can interconnect a computer, a portable device (e.g. a mobile phone and a tablet computer) and other terminals wirelessly. At present, the smart phone and the tablet computer widely support access to the Internet through the WiFi, and the WiFi is a wireless network transmission technology in common use currently. With the popularization of portable terminals like the mobile phone and the tablet computer, a WiFi network increasingly becomes an indispensable tool in people's daily work and life. It is generally known that the portable terminal adopts a battery for power supply, so it may be carried and is convenient to use. However, because the rate of the portable device gets higher and higher, and a Liquid Crystal Display (LCD) develops towards the trend of large screen, a battery with larger capacity is needed for satisfying the endurance ability of the device.

In the application "Method and Device for Managing Power of Portable 3G Wireless Internet-based Device" whose application number is CN201020108585.6, a method for managing power is introduced, which includes that: a WiFi rate is adjusted according to a condition of the 3G network used by a user; and aiming at the different WiFi rates, a WiFi component is controlled to transmit corresponding power. But the method involves the processing of a core network, which causes problems that not only the system power consumption cannot be effectively reduced, but also the processing efficiency is low.

Thus, there are problems of not only weak independence but also low processing efficiency when processing the power consumption of the terminal in related art.

### Summary

The present disclosure provides a method and device for controlling transmitting power, and a terminal, for at least solving the problems in related art of not only weak independence but also low processing efficiency when processing the power consumption of the terminal.

According to an aspect of the present disclosure, a method for controlling transmitting power is provided, comprising: detecting a strength value of a received Wireless Fidelity, WiFi, signal; determining, according to the strength value of the received WiFi signal and a corresponding relationship between a strength value of a WiFi signal and a transmitting power value, a transmitting power value corresponding to the strength value of the received WiFi signal; and controlling the transmitting power according to the determined transmitting power value.

In an example embodiment of the present disclosure, detecting the strength value of the received WiFi signal comprises: setting a timer for a detection of the strength value of the WiFi signal; judging whether a preset period of the timer expires; and when a judgement result is that the preset period of the timer expires, making statistics to get an average of strength values of received WiFi signals in the preset period.

In an example embodiment of the present disclosure, before determining, according to the strength value of the received WiFi signal and the corresponding relationship between the strength value of the WiFi signal and the transmitting power value, the transmitting power value corresponding to the strength value of the received WiFi signal, further comprising: performing a simulative detection on a power-saving effect achieved under the strength value of the WiFi signal and the transmitting power value; and determining the corresponding relationship between the strength value of the WiFi signal and the transmitting power value according to a result of the simulative detection.

In an example embodiment of the present disclosure, controlling the transmitting power according to the determined transmitting power value comprises: acquiring a battery level in a current state; and controlling the transmitting power according to the acquired battery level and the determined transmitting power value.

In an example embodiment of the present disclosure, in the corresponding relationship, the transmitting power value decreases with increase of the strength value of the WiFi signal.

According to another aspect of the present disclosure, a device for controlling transmitting power is provided, comprising: a first detecting component, configured to detect a strength value of a received Wireless Fidelity, WiFi, signal; a first determining component, configured to determine, according to the strength value of the received WiFi signal and the corresponding relationship between the strength value of the WiFi signal and the transmitting power value, a transmitting power value corresponding to the strength value of the received WiFi signal; and a controlling component, configured to control the transmitting power according to the determined transmitting power value.

In an example embodiment of the present disclosure, the first detecting component comprises: a setting element, configured to set a timer for a detection of the strength value of the WiFi signal; a judging element, configured to judge whether a preset period of the timer expires; and a statistics element, configured to, when a judgement result of the judging element is that the preset period of the timer expires, make statistics to get an average of strength values of received WiFi signals in the preset period.

In an example embodiment of the present disclosure, the device further comprising: a second detecting component, configured to perform a simulative detection on a power-saving effect achieved under the strength value of the WiFi signal and the transmitting power value; and a second determining component, configured to determine the corresponding relationship between the strength value of the WiFi signal and the transmitting power value according to a result of the simulative detection.

In an example embodiment of the present disclosure, the controlling component comprises: an acquiring element, configured to acquire a battery level in a current state; and a controlling element, configured to control the transmitting power according to the acquired battery level and the determined transmitting power value.

According to another aspect of the present disclosure, a terminal is provided, which includes the above device.

Through the present disclosure, a strength value of a received WiFi signal is detected, a transmitting power value corresponding to the strength value of the received WiFi signal is determined according to the strength value of the received WiFi signal and a corresponding relationship between a strength value of a WiFi signal and a transmitting power value, and the transmitting power is controlled according to the determined transmitting power value, the present disclosure solves the problems in related art of not only weak independence but also low processing efficiency when processing the power consumption of the terminal, and then achieves the effect that the terminal controls the amount of the transmitting power according to the strength value of the WiFi signal received by the terminal, so that not only a third party is not required to be depended on, but also the power consumption of a system can be effectively reduced.

### Brief Description of the Drawings

The accompanying drawings described here are used for providing a deeper understanding of the present disclosure, and constitute a part of the application; schematic embodiments of the present disclosure and description thereof are used for illustrating the present disclosure and not intended to form an improper limit to the present disclosure. In the accompanying drawings:
Fig. 1 shows a flowchart of the method for controlling the transmitting power according to an embodiment of the present disclosure;
Fig. 2 shows a structure diagram of the device for controlling the transmitting power according to an embodiment of the present disclosure;
Fig. 3 shows an example structure diagram of the first detecting component 22 in the device for controlling the transmitting power according to an embodiment of the present disclosure;
Fig. 4 shows an example structure diagram of the device for controlling the transmitting power according to an embodiment of the present disclosure;
Fig. 5 shows an example structure diagram of the controlling component 26 in the device for controlling the transmitting power according to an embodiment of the present disclosure;
Fig 6 shows a structure diagram of a terminal according to an embodiment of the present disclosure;
Fig. 7 shows a structure diagram of a system for controlling WiFi amplifier power of a portable terminal according to an example implementation of the present disclosure; and
Fig. 8 shows a flowchart of a method for controlling WiFi amplifier power of a portable terminal according to an example implementation of the present disclosure.

### Detailed Description of the Embodiments

The present disclosure is elaborated below with reference to the accompanying drawings and embodiments. Note that, embodiments and features in embodiments in the application can be combined with each other on condition of not conflicting.

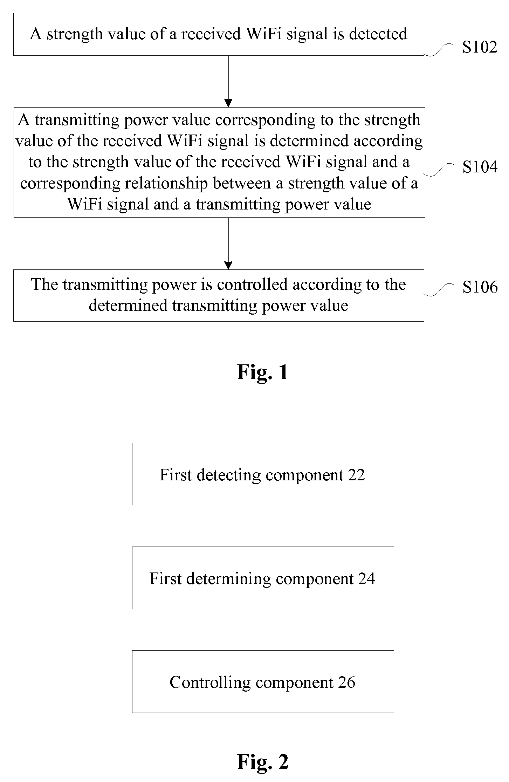

In the present embodiment, a method for controlling transmitting power is provided; Fig. 1 shows a flowchart of the method for controlling the transmitting power according to an embodiment of the present disclosure; as shown in Fig. 1, the flow includes the following steps:
S102: a strength value of a received WiFi signal is detected;
S104: a transmitting power value corresponding to strength value of the received WiFi signal is determined according to the strength value of the received WiFi signal and a corresponding relationship between a strength value of a WiFi signal and a transmitting power value; it is noted that, in the corresponding relationship, the transmitting power value decreases with increase of the strength value of the WiFi signal;
S106: the transmitting power is controlled according to the determined transmitting power value.

Through the above steps, the transmitting power is controlled according to the detected strength value of the WiFi signal received by the terminal, which solves the problems in related art of not only weak independence but also low processing efficiency when processing the power consumption of the terminal, and then achieves the effect that the terminal controls the amount of the transmitting power according to the strength value of the WiFi signal intensity received by the terminal, so that not only a third party is not required to be depended on, but also the power consumption of a system can be effectively reduced.

There can be a variety of processing ways adopted to detecte the strength value of the received WiFi signal; for example, a way of taking an average of the strength values of WiFi signals; that is, a timer is first set for a detection of the strength value of the WiFi signal; it is judged whether a preset period of the timer expires; when a judgement result is that the preset period of the timer expires, statistics is made to get an average of strength values of received WiFi signals in the preset period. Adopting the processing way of taking the average can not only effectively avoid the frequency of adjustment, but also accurately adjust the transmitting power.

Before the transmitting power value corresponding to the strength value of the received WiFi signal is determined according to the strength value of the received WiFi signal and the corresponding relationship between the strength value of the WiFi signal and the transmitting power value, the corresponding relationship between the strength value of the WiFi signal and the transmitting power value may also be acquired in a variety of ways, for example, more simply, the corresponding relationship between the strength value of the WiFi signal and the transmitting power value may be acquired in the following way: a simulative detection is performed on a power-saving effect achieved under the strength value of the WiFi signal and the transmitting power value; and the corresponding relationship between the strength value of the WiFi signal and the transmitting power value is determined according to a result of the simulative detection.

In an example embodiment, controlling the transmitting power according to the determined transmitting power value may be that: first a battery level in a current state is acquired; and the transmitting power is controlled according to the acquired battery level and the determined transmitting power value. That is, the transmitting power is controlled effectively and accurately by way of considering multiple factors.

In the present embodiment, a device for controlling transmitting power is further provided; the device is used for implementing the above embodiments and example implementations, these which have been illustrated will not be repeated. For example, the term "component" below can implement a combination of software and/or hardware with expected functions. Although the device described in the following embodiments is implemented by software preferably, the implementation through hardware or the combination of software and hardware is possible and conceived.

Fig. 2 shows a structure diagram of the device for controlling the transmitting power according to an embodiment of the present disclosure; as shown in Fig. 2, the device includes a first detecting component 22, a first determining component 24 and a controlling component 26; the device is illustrated below.

The first detecting component 22 is configured to detect a strength value of a received WiFi signal; the first determining component 24 is connected to the first detecting component 22, and configured to determine, according to the strength value of the received WiFi signal and the corresponding relationship between the strength value of the WiFi signal and the transmitting power value, a transmitting power value corresponding to the strength value of the received WiFi signal; the controlling component 26 is connected to the first determining component 24, and configured to control the transmitting power according to the determined transmitting power value.

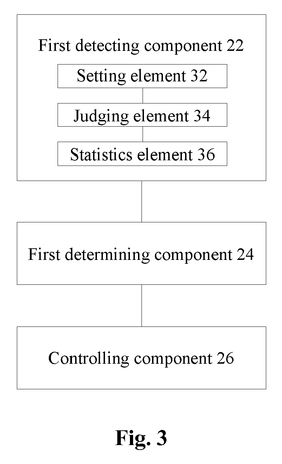

Fig. 3 shows an example structure diagram of the first detecting component 22 in the device for controlling the transmitting power according to an embodiment of the present disclosure; as shown in Fig. 3, the first detecting component 22 includes a setting element 32, a judging element 34 and a statistics element 36; the first detecting component 22 is illustrated below.

The setting element 32 is configured to set a timer for a detection of the strength value of the WiFi signal; the judging element 34 is connected to the setting element 32, and configured to judge whether a preset period of the timer expires; the statistics element 36 is connected to the judging element 34, and configured to, when a judgement result is that the preset period of the timer expires, make statistics to get an average of strength values of received WiFi signals in the preset period.

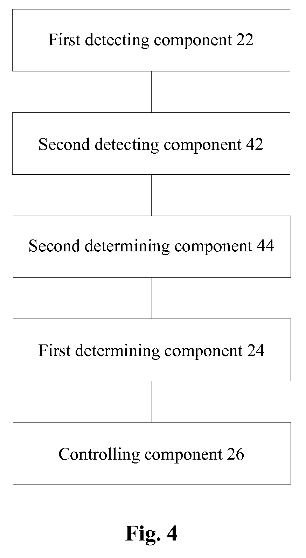

Fig. 4 shows an example structure diagram of the device for controlling the transmitting power according to an embodiment of the present disclosure; as shown in Fig. 4, except all the components shown in Fig. 2, the device further includes a second detecting component 42 and a second determining component 44; the device is illustrated below.

The second detecting component 42 is connected to the first detecting component 22, and configured to perform a simulative detection on a power-saving effect achieved under the strength value of the WiFi signal and the transmitting power value; the second determining component 44 is connected to the second detecting component 42 and the first determining component 24, and configured to determine the corresponding relationship between the strength value of the WiFi signal and the transmitting power value according to a result of the simulative detection.

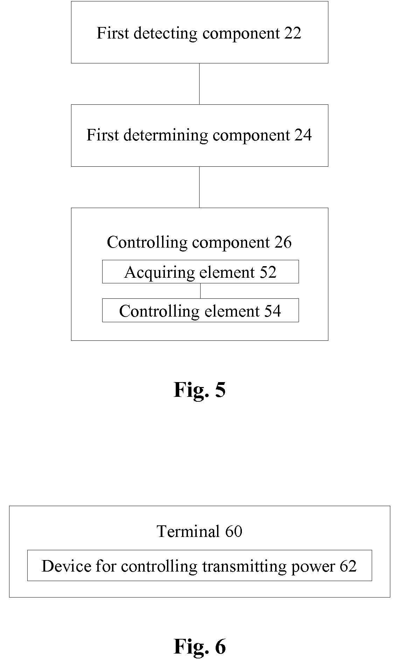

Fig. 5 shows an example structure diagram of the controlling component 26 in the device for controlling the transmitting power according to an embodiment of the present disclosure; as shown in Fig. 5, the controlling component 26 includes an acquiring element 52 and a controlling element 54; the controlling component 26 is illustrated below.

The acquiring element 52 is configured to acquire a battery level in a current state; the controlling element 54 is connected to the acquiring element 52, and configured to control the transmitting power according to the acquired battery level and the determined transmitting power value.

Fig. 6 shows a structure diagram of a terminal according to an embodiment of the present disclosure; as shown in Fig. 6, the terminal 60 includes the above device for controlling the transmitting power 62.

Aiming at the problems in related art of not only weak independence but also low processing efficiency when processing the power consumption of the terminal, in the present embodiment, the aims of reducing WiFi power consumption, reducing created heat and improving endurance are achieved by using a method of controlling a WiFi power amplifier according to a WiFi network quality situation. By controlling WiFi amplifier power according to the strength value of the WiFi signal received by the terminal itself, a third party parameter is not needed, thereby effectively reducing the WiFi power consumption.

Being independent from the system, the method is the one for managing the WiFi power consumption of a portable terminal without relying on the third party; in the method, the WiFi amplifier power is controlled by detecting the strength value of the WiFi signal received by the terminal itself, so that according to the actual network quality situation, system power consumption is reduced while meeting a WiFi data processing requirement. The above can be implemented in the following way: the portal terminal is started and initialized to complete configuration of peripherals and read information of the battery level; whether a WiFi component is started is detected; whether the portable terminal connects to a WiFi network is detected; after the portable terminal connects to the WiFi network, the strength value of the WiFi signal received by a mobile phone is read; and according to the strength value of the WiFi signal received by the portable terminal, an internal configuration table is queried, and the transmitting power value of the WiFi amplifier is controlled.

Compared with related art, the method for managing the WiFi power consumption of a portable terminal controls the transmitting power value of the WiFi amplifier by detecting the strength value of the WiFi network signal received by the terminal itself, so that the system power consumption is reduced while meeting the WiFi data processing requirement. Besides, the method is independent from the system, and does not rely on third party data, so it has a wider range of application.

The example implementations of the present disclosure are illustrated below in combination with the accompanying drawings.

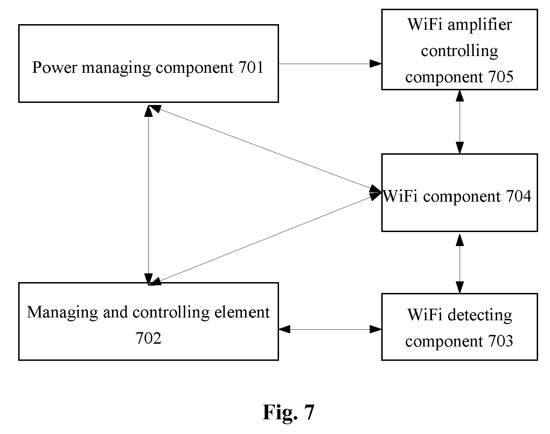

Fig. 7 shows a structure diagram of a system for controlling the WiFi amplifier power of a portable terminal according to an example implementation of the present disclosure; as shown in Fig. 7, the system includes: a power managing component 701, a portable terminal managing and controlling component 702, a WiFi detecting component 703 (functionally equaling to the acquiring element 52 and the first detecting component 22), a WiFi component 704 and a WiFi amplifier power controlling component 705 (functionally equaling to the controlling component 26).

Wherein, the power managing component 701 mainly takes charge of power management of the terminal system, including configuration of voltage and current of each component, and charge and discharge of a battery; the portable terminal managing and controlling component 702 which plays a leading role in the entire system mainly takes charge of detecting and controlling the components of the system, such as an Liquid Crystal Display (LCD), a touch screen, a keyboard and an SIM card; the WiFi detecting component 703 mainly takes charge of detecting the battery level and the quality of the WiFi signal; the WiFi amplifier power controlling component 705 mainly takes charge of configuring the amount of transmitting power of the amplifier according to a preconfigured query table, the battery level and the quality situation of the WiFi signal; the WiFi component 704 mainly takes charge of wireless communication power of the terminal and realization of data transmission.

Related computers using a wireless router to support the technology of the related computers, convert a wired network signal to a wireless signal, to realize the data transmission between devices supporting WiFi. When a WiFi function is provided in a mobile phone, a tablet computer and other devices, and when there are WiFi wireless signals, the Internet can be accessed not through networks of mobile network operators. So the WiFi signal is also data provided based on a wired network; WiFi wireless network sharing can be realized by changing the traditional router to the wireless router. Generally, WiFi signal transmission is influenced by the distance, the building and others, and the signal qualities of different places in a mobile environment are different. When the distance is short, and there are few barriers, the WiFi signal quality is high; or else, the WiFi signal quality is poor.

The portable device is powered by a lithium battery on the system; the practicability of the lithium battery reduces the weight and size of portable electronic devices like a mobile phone, a laptop computer, and a calculator, so that the portable device has characteristics of being convenient to carry, flexible to use and long in endurance time. The portable device usually adopts a USB interface to supply power, which combines a charge function and a function of data transmission.

Through the system, the power consumption efficiency of the WiFi component is optimized, and the endurance time of the system is prolonged.

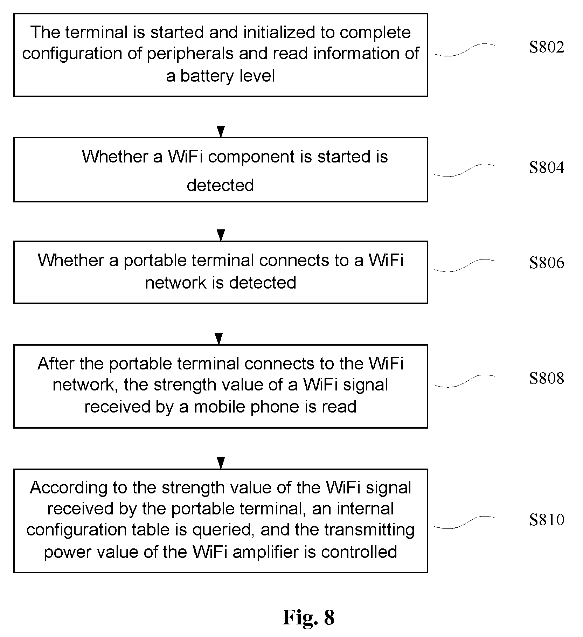

Fig. 8 shows a flowchart of a method for controlling WiFi amplifier power of a portable terminal according to an example implementation of the present disclosure; as shown in Fig. 8, the flow includes the following steps.

S802: after a user presses a power button to trigger a terminal system power request, the power managing component 701 starts to initialize.

The battery starts to supply power for the power managing component 701, and then the power managing component 701 outputs different voltages to the terminal managing and controlling component 702 and other components on the system.

Meanwhile a clock component on the system starts to work to output a clock.

When the power and clock meet conditions, the terminal managing and controlling component 702 is started to conduct system initialization to complete initial configuration of the managing and controlling component 702 and the initial configuration of other components on the system.

Meanwhile the information of the battery level is read, and according to a battery level situation, whether the current power supply is normal is indicated for the system.

When the battery power is low, the user is prompted to charge. When the battery power is normal, the system waits for the user to input, and completes functions required by the user.

Or else, after waiting for a certain duration of time, when there is no operation of the user, the system enters a low power consumption state, that is, peripheral components of the system, such as the LCD, the touch screen, an indicator light and a sensor, are in a power-off or a low power consumption state, a mobile network is in a breathing state, and the current is only a few milliamps, so as to achieve the aim of saving power.

S804: Whether the WiFi component 704 is started is detected. When there is a requirement of the user for data transmission, the mobile network or the WiFi network may be selected to carry out operations of accessing to the Internet and sharing a wireless hotspot. When the WiFi network is selected by the user, firstly a wireless WiFi switch is turned on to start the WiFi component 704 on the terminal device, and the WiFi amplifier power controlling component 705 supplies power for the amplifier, and starts to send and receive data.

S806: after it is detected that the WiFi component 704 is started, WiFi sends a message to the system.

The system is informed of the requirement for data transmission of the user, and it is scanned whether there is a valid wireless hotspot for use around the terminal device.

When the valid wireless hotspot is scanned, a user name and password are input for login.

When the login is successful, the data provided by the wireless hotspot can be used.

Or else, the user is prompted that login information of the user is wrong, until the user inputs the correct login information or disables the WiFi component.

S808: after the user logs in successfully, the wireless data starts to be transmitted normally.

The wireless signal is received by a WiFi antenna and subjected to signal processing, like filtering and amplification.

The wireless signal is sent to the WiFi component 704 for signal encoding and decoding; the WiFi detecting component 703 acquires data, and detects the WiFi signal quality in real time.

The WiFi detecting component 703 performs data interaction with the terminal managing and controlling component 702 via a data interface, so as to complete reading of the strength value of the WiFi signal.

The WiFi supports the intercommunity between wireless network products based on IEEE802.11 standard, and the currently supported protocol version is IEEE802.11b/g/n. When the supported protocol is different, the maximum transmission rate is also different. The current protocol of high version is backward compatible with the rate of low version, so the WiFi component can transmit at different rates, and the system power consumption is different at different rates. The higher the rate, the power consumption increases correspondingly and vice versa.

S810: when it is detected that the strength value of the WiFi signal is a certain value, the transmitting power value of the WiFi amplifier is calculated according to a preset comparison table of strength value of signal-transmitting power of amplifier.

When the wireless signal quality is poorer, the transmitting power of the WiFi amplifier is increased; when the wireless signal quality is higher, the transmitting power of the WiFi amplifier is decreased.

Aiming at the different signal values, the WiFi amplifier transmits the different power values.

By detecting the signal quality of the WiFi component, and then the transmitting power of the WiFi amplifier is adjusted and controlled in real time, the requirements for reducing the power consumption and prolonging the endurance time are met; besides, the method has a wider range of application because of not relying on the third party data.

Obviously, those skilled in the art should appreciate that the above components and steps of the present disclosure can be implemented by a general-purpose computing device, and they can be centralized in a single computing device or distributed on a network composed of multiple computing devices; optionally, they can be implemented by a program code which is capable of being executed by the computing device, so that they can be stored in a storage device and executed by the computing device; and under some conditions, the presented or described steps can be executed in an order different from that described here; or they are made into integrated circuit components, respectively; or multiple components and steps of them are made into a single integrated circuit component to realize. In this way, the present disclosure is not limited to any particular combination of hardware and software.

The above is only the preferred embodiment of the present disclosure and not intended to limit the present disclosure; for those skilled in the art, the present disclosure may have various modifications and changes. Any modifications, equivalent replacements, improvements and the like within the spirit and principle of the present disclosure shall fall within the scope of the claims of the present disclosure.

### Industrial Applicability

As described above, a method and device for controlling transmitting power, and a terminal provided by the present disclosure bring the following beneficial effects: the problems in related art of not only weak independence but also low processing efficiency when processing the power consumption of the terminal are solved, and then the effect that the terminal controls the amount of the transmitting power according to the strength value of the WiFi signal received by the terminal, so that not only is a third party not required to be depended on, but also the power consumption of a system can be effectively reduced is achieved.

## Claims

1. A method for controlling transmitting power, comprising:
detecting a strength value of a received Wireless Fidelity, WiFi, signal;
determining, according to the strength value of the received WiFi signal and a corresponding relationship between a strength value of a WiFi signal and a transmitting power value, a transmitting power value corresponding to the strength value of the received WiFi signal; and
controlling the transmitting power according to the determined transmitting power value.

2. The method as claimed in claim 1, wherein detecting the strength value of the received WiFi signal comprises:
setting a timer for a detection of the strength value of the WiFi signal;
judging whether a preset period of the timer expires; and
when a judgement result is that the preset period of the timer expires, making statistics to get an average of strength values of received WiFi signals in the preset period.

3. The method as claimed in claim 1, before determining, according to the strength value of the received WiFi signal and the corresponding relationship between the strength value of the WiFi signal and the transmitting power value, the transmitting power value corresponding to the strength value of the received WiFi signal, further comprising:
performing a simulative detection on a power-saving effect achieved under the strength value of the WiFi signal and the transmitting power value; and
determining the corresponding relationship between the strength value of the WiFi signal and the transmitting power value according to a result of the simulative detection.

4. The method as claimed in claim 1, wherein controlling the transmitting power according to the determined transmitting power value comprises:
acquiring a battery level in a current state; and
controlling the transmitting power according to the acquired battery level and the determined transmitting power value.

5. The method as claimed in any one of claims 1 to 4, wherein in the corresponding relationship, the transmitting power value decreases with increase of the strength value of the WiFi signal.

6. A device for controlling transmitting power, comprising:
a first detecting component, configured to detect a strength value of a received Wireless Fidelity, WiFi, signal;
a first determining component, configured to determine, according to the strength value of the received WiFi signal and the corresponding relationship between the strength value of the WiFi signal and the transmitting power value, a transmitting power value corresponding to the strength value of the received WiFi signal; and
a controlling component, configured to control the transmitting power according to the determined transmitting power value.

7. The device as claimed in claim 6, wherein the first detecting component comprises:
a setting element, configured to set a timer for a detection of the strength value of the WiFi signal;
a judging element, configured to judge whether a preset period of the timer expires; and
a statistics element, configured to, when a judgement result of the judging element is that the preset period of the timer expires, make statistics to get an average of strength values of received WiFi signals in the preset period.

8. The device as claimed in claim 6, further comprising:
a second detecting component, configured to perform a simulative detection on a power-saving effect achieved under the strength value of the WiFi signal and the transmitting power value; and
a second determining component, configured to determine the corresponding relationship between the strength value of the WiFi signal and the transmitting power value according to a result of the simulative detection.

9. The device as claimed in claim 6, wherein the controlling component comprises:
an acquiring element, configured to acquire a battery level in a current state; and
a controlling element, configured to control the transmitting power according to the acquired battery level and the determined transmitting power value.

10. A terminal, comprising a device as claimed in any one of claims 6 to 9.
